# EUROPEAN PATENT APPLICATION

(11) **EP 2 177 410 A1**
(43) Date of publication of application: **21.04.2010**
(21) Application number: 08791721.7
(22) Date of filing: 22.07.2008
(51) Int. Cl.: B60T 7/12

(54) **VEHICLE CONTROLLER AND VEHICLE MOUNTED WITH THE SAME**

(30) Priority: 18.03.2008 JP 2008069793
(71) Applicant: Mitsubishi Heavy Industries, Ltd., Tokyo 108-8215 (JP)
(72) Inventor: ISHIKAWA, Naoki, Sagamihara-shi Kanagawa 229-1193 (JP); UEDA, Katsumi, Sagamihara-shi Kanagawa 229-1193 (JP); SEKI, Masanobu, Sagamihara-shi Kanagawa 229-1193 (JP)
(74) Representative: Henkel, Feiler & Hänzel
(86) International application number: PCT/JP2008/063485
(87) International publication number: WO 2009/116188

(57) **Abstract**

Provided are a vehicle controller and a vehicle mounted with the vehicle controller capable of performing a control for realizing an operator's intention to stop or start a vehicle without performing a troublesome driving operation. In a controller 20 mounted to a vehicle and including a vehicle speed sensor 2 detecting a vehicle speed, a solenoid control brake 10 controlled by a solenoid control valve 9, and a brake pedal sensor 2 detecting an operation amount of a brake pedal 1 used to operate a service brake, when the vehicle speed detected by the vehicle speed sensor 2 is not more than a predetermined vehicle speed X km/h indicating a vehicle stop state and a brake ON signal detected by the brake pedal sensor 2 continues for a predetermined time Y or more, a control signal for enabling the solenoid control brake 10 is output to the solenoid control valve 9.

## Description

### Technical Field

The present invention relates to a vehicle controller and a vehicle mounted with the vehicle controller capable of preventing an unstable slide (rollback) by maintaining a vehicle stop state even when a vehicle posture is not stable on a slope or the like, and particularly, to a vehicle controller and a vehicle mounted with the vehicle controller capable of performing a control for realizing an operator's intention to stop or start the vehicle.

### Background Art

Generally, in a vehicle, an operator needs to continuously press a brake pedal or apply a parking brake so that the vehicle does not move in a stop state when a vehicle posture is not stable on a slope or the like. In addition, when a start operation of the vehicle stopping in the slope is performed, an accelerator operation and a brake disabling operation need to be performed so as to prevent the rollback of the vehicle, which causes a troublesome driving operation.

For this reason, from the past, there has been proposed and used a technology in which an angle sensor is attached to a vehicle, an inclined angle of a vehicle with respect to a road surface is detected by the angle sensor, and a brake such as a parking brake is operated in accordance with the inclined angle. With this configuration, when the vehicle stops on a slope having a large inclined angle, the brake is automatically applied, thereby improving safety.

In addition, Patent Document 1 (Japanese Patent Application Laid-Open No. 2002-283984) discloses a configuration in which a brake force is applied so as to maintain a stop state of a vehicle stopping on a slope when a brake operation force not less than a predetermined brake operation force corresponding to a slope having a minimum inclined angle is detected by using a principle that the brake operation force is different in accordance with an inclined angle of a road surface in the vehicle stop state.

As described above, in order to maintain the vehicle stop state when the vehicle posture is not stable in the slope or the like, it is necessary to perform the troublesome driving operation such that the brake pedal is continuously pressed or the parking brake is applied whenever the vehicle posture is not stable. In addition, when the start operation of the vehicle is performed in the unstable state in the slope or the like, since there is a concern such as sliding, a vehicle has been demanded which has greater safety with respect to the vehicle and the vicinity thereof.

Meanwhile, there has been proposed and used the technology in which the inclined angle of the slope is detected by the angle sensor and the brake is operated in accordance with the inclined angle. However, in the technology, since it is necessary to further provide the angle sensor, problems arise in that cost increases and control is complicated.

In addition, in the method of applying the brake force of the brake in accordance with the inclined angle as disclosed in Patent Document 1, since there is a difference in the brake force operation performed by an operator, and the state of the sloped surface of the road (a gravel road, a farm road, a rain wet road, an asphalt road, or the like) is not uniform, it is necessary to separately set each brake force in order to perform a highly precise control. For this reason, the technology is not suitable for the general purpose.

### Summary of Invention

Therefore, the present invention is contrived in consideration of the above-described problems of the background art, and an object thereof is to provide a vehicle controller and a vehicle mounted with the vehicle controller capable of performing a control for realizing an operator's intention to stop or start a vehicle with a simple configuration without performing a troublesome driving operation.

In order to achieve the above-described object of the invention, there is provided a vehicle controller mounted to a vehicle, including: a vehicle speed sensor configured to detect a vehicle speed; a brake pedal sensor configured to detect an operation state of a brake pedal used to operate a service brake; a solenoid control valve provided in any one of brake hydraulic lines of the service brake and a parking brake or any one of control brake hydraulic lines disposed in parallel to the brake hydraulic lines regardless of the operation of the service brake; and a controller configured to control a current supply to the solenoid control valve so as to control an operation state of a hydraulic force in the hydraulic line provided with the solenoid control valve and to apply (enable) or cancel a solenoid control brake braking force applied to an axle or a wheel, wherein when the vehicle speed detected by the vehicle speed sensor is not more than a predetermined vehicle speed indicating a vehicle stop state and a brake ON signal detected by the brake pedal sensor continues for a predetermined time or more, the controller outputs a control signal to the solenoid control valve so as to enable the solenoid control brake, and wherein desirably the control brake is disabled by a trigger signal for detecting a vehicle acceleration state or a vehicle traveling direction change state in addition to the vehicle stop state.

According to the invention, it is possible to perform a control for realizing an operator's intention to stop or start the vehicle with a simple configuration without performing a troublesome driving operation. Also, since it is possible to reliably perform a braking operation of the solenoid control brake by adjusting a hydraulic force, it is possible to improve safety.

That is, in the invention, it is determined that the operator intends to stop the vehicle when the vehicle stop state and the brake ON signal of the brake pedal are continuously detected for a predetermined time or more. In this case, since a control for automatically enabling the solenoid control brake is performed, it is possible to reliably maintain the vehicle stop state even when a vehicle posture is not stable on a slope or the like, and thus to improve safety. In addition, since the control is performed only when the brake ON signal is continuously detected for the predetermined time or more, it is possible to accurately determine the operator's intention to stop the vehicle.

In addition, the vehicle includes an accelerator opening degree detecting sensor configured to detect an accelerator ON state and shift range detecting means for detecting a shift range instructed by shift operating means. When the controller detects an input signal indicating a forward or reverse through the shift range detecting means and detects an accelerator ON state having a predetermined opening degree or more through the accelerator opening degree detecting sensor, the controller outputs a cancel signal to the solenoid control valve so as to disable the solenoid control brake.

At this time, it is desirable that a control signal for disabling the solenoid control brake is output to the solenoid control valve when the accelerator ON state having a predetermined opening degree or more is detected for a predetermined time t1 or more and an input signal indicating the forward or reverse detected by the shift range detecting means is detected for a predetermined time or more.

According to the invention, since the brake cancel condition is set such that the brake control is canceled only when the shift range is detected as the forward or reverse and the accelerator ON state having a predetermined opening degree or more is detected, it is possible to perform a control for realizing the operator's intention to start the vehicle, and to prevent an erroneous control such that the brake control is canceled at a timing not intended by the operator.

In addition, there is provided alarm means for giving an alarm to an operator or a third person in the vicinity of the vehicle when the solenoid control brake is enabled.

Further, a brake lamp included in the vehicle is turned on when the solenoid control brake is enabled.

Likewise, since it is possible to inform the operator or the third person in the vicinity of the vehicle of the enabled or disabled state of the solenoid control brake by using the alarm means or turning on or off the brake lamp, it is possible to guide the operator to perform an appropriate driving operation, and for the operator and the third person to accurately detect the vehicle state. As a result, it is possible to improve safety.

In addition, it is desirable that the solenoid control brake is configured as a negative brake which is disabled by an operation fluid supplied from a pump driven by a motor provided in the vehicle.

Here, as it is generally known, a braking operation of the negative brake is enabled in the case where a brake driving force is not applied to a brake, and is disabled in other cases. An example of the negative brake includes a machine in which a coil spring mechanically presses a friction plate (pad) and a hydraulic pressure or an electromagnetic coil reversely presses the coil spring. For example, in the case where a hydraulic pressure generated from a hydraulic pump driven by an engine is a driving source of a brake, when the engine is stopped, the hydraulic pressure is not generated, and a brake force is maintained by a pressing force of a coil spring. When the engine is operated, the hydraulic pressure is generated, and the pressing force of the coil spring is canceled by using the hydraulic pressure as a driving source, so that the braking operation is canceled.

By the application of the negative brake, in the case where the engine is completely turned off in the vehicle stop state or trouble or inconvenience is caused by the disconnection or the like of the solenoid, the brake is reliably enabled, thereby improving the safety of the vehicle.

In addition, the vehicle according to the invention is a vehicle mounted with the vehicle controller. Accordingly, it is possible to provide a vehicle capable of realizing an operator's intention to stop or start the vehicle without performing a troublesome driving operation, and thus to improve the operator's operability and the safety of the vehicle.

As described above, according to the invention, it is possible to perform a control for realizing an operator's intention to stop or start the vehicle with a simple configuration without performing a troublesome driving operation, and thus to improve the operator's operability and safety.

That is, in the invention, it is determined that the operator intends to stop the vehicle when the vehicle stop state and the brake ON signal of the brake pedal are continuously detected for a predetermined time or more. In this case, since a control for automatically enabling the solenoid control brake is performed, it is possible to reliably maintain the vehicle stop state even when a vehicle posture is not stable on a slope or the like, and thus to improve safety. In addition, since the control is performed only when the brake ON signal is continuously detected for the predetermined time or more, it is possible to accurately determine the operator's intention to stop the vehicle.

In addition, since the brake cancel condition is set such that the brake control is canceled only when the shift range is detected as the forward or reverse and the accelerator ON state having a predetermined opening degree or more is detected, it is possible to perform a control for realizing the operator's intention to start the vehicle, and to prevent an erroneous control such that the brake control is canceled at a timing not intended by the operator. Also, since a predetermined time t1 is set for determining the continuous state of the accelerator opening degree and a predetermined time t2 is set for determining the continuous state of the forward or reverse, even when the operator erroneously and momentarily operates the pedal or the shift (the erroneous operation indicates an operation caused by an erroneous contact or the like), it is possible to reliably exclude the erroneous operation, and thus to smoothly cancel the brake control.

Further, since it is possible to inform the operator or the third person in the vicinity of the vehicle of the enabled or disabled state of the brake by using the alarm means or the brake lamp, it is possible to guide the operator to perform an appropriate driving operation, and for the operator and the third person to accurately detect the vehicle state. As a result, it is possible to improve safety.

### Brief Description of the Drawings

Fig. 1 is a schematic configuration diagram showing a vehicle controller and a peripheral device thereof according to an embodiment of the invention.
Fig. 2 is a state transition diagram illustrating a control according to the embodiment of the invention.
Fig. 3 is a flowchart showing a process of a brake control according to the embodiment.
Fig. 4 is a flowchart showing a process of turning on or off a brake control flag according to the embodiment.
Fig. 5 is a schematic configuration diagram showing a peripheral configuration of a solenoid control brake (service brake) according to the invention.

### Detailed Description of the Preferred embodiments

Hereinafter, an exemplary embodiment of the invention will be described in detail with reference to the accompanying drawings. However, the dimensions, materials, shapes, and relative arrangement of the constituents described in this embodiment are not used to limit the scope of the invention unless a particular description is made, and are merely examples of the invention.

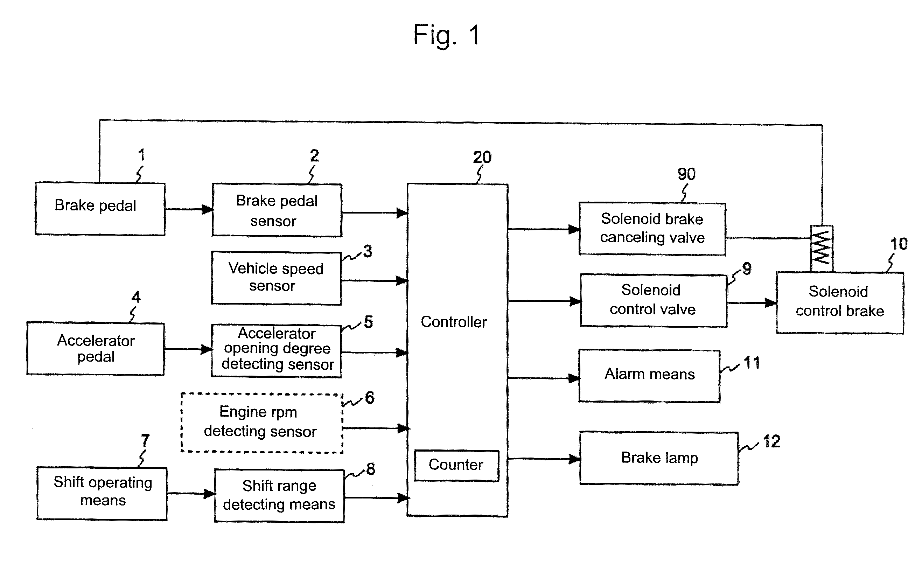

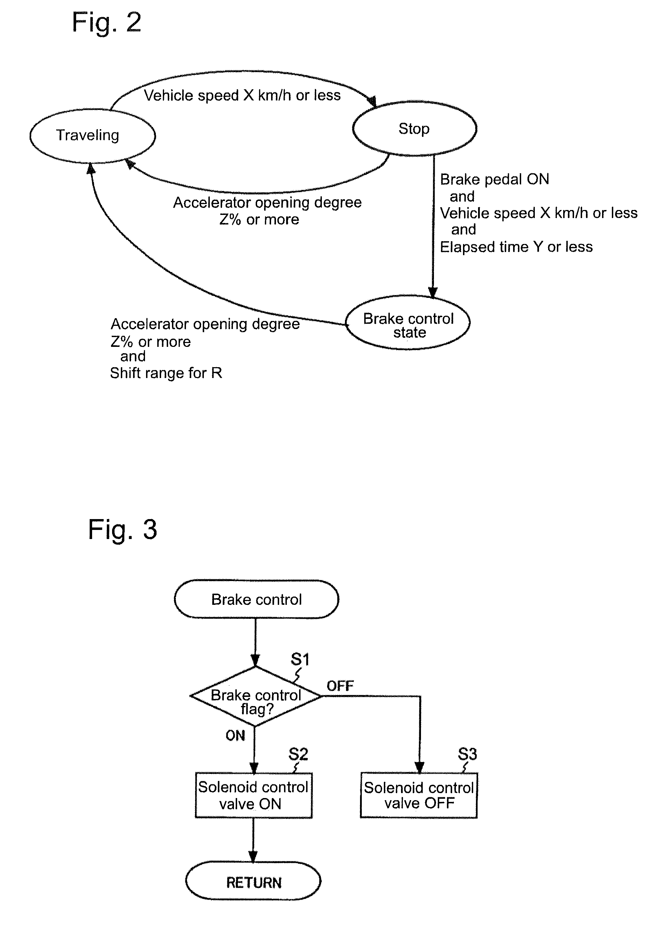

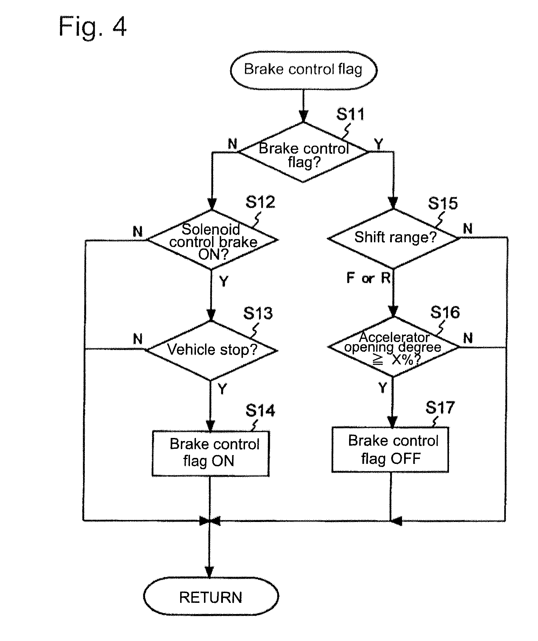

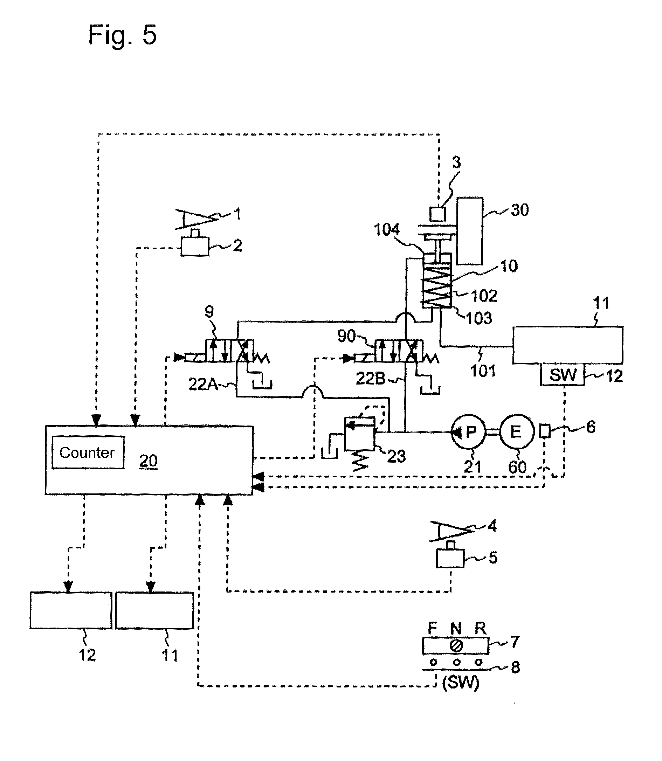

Fig. 1 is a schematic configuration diagram showing a vehicle controller and a peripheral device thereof according to an embodiment of the invention. Fig. 2 is a state transition diagram illustrating a control according to the embodiment of the invention. Fig. 3 is a flowchart showing a process of a brake control according to the embodiment. Fig. 4 is a flowchart showing a process of turning on or off a brake control flag according to the embodiment. Fig. 5 is a control block diagram showing a relationship between a brake and a vehicle controller according to the invention.

The configuration according to this embodiment may be applied to various vehicles such as an automobile, and particularly, to industrial vehicles represented by a cargo handling machine such as a forklift or a reach stacker or a construction machine such as a motor grader, a bulldozer, or a wheel loader.

First, the schematic configuration of the vehicle controller according to this embodiment will be described with reference to Figs. 1 and 5.

A controller 20 is configured as a computer including a CPU, a RAM, a ROM, and the like, and receives electric signals from a brake pedal 1, a brake pedal (pressing amount detecting) sensor 2, a vehicle speed sensor 3, an accelerator opening degree detecting sensor 5 for an accelerator pedal 4, an engine rpm detecting sensor 6, shift range detecting means 8 for detecting forward, reverse, and neutral shift ranges operated by shift operating means 7, and the like which are included in an industrial vehicle. On the basis of the electric signals, the controller 20 controls a current supply state of the solenoid control valve (brake braking hydraulic opening/closing valve) 9 so as to control an opening/closing state of a hydraulic line 22 and to control an operation state of a solenoid control brake 10.

The peripheral configuration of the solenoid control brake 10 according to the invention will be described with reference to Fig. 5. The brake pedal 1 applies a hydraulic pressure through a master seal ring (not shown), and applies a brake force to an axle or a wheel 30. On the other hand, a parking brake 11 operates the solenoid control brake 10 including a hydraulic chamber 103 accommodating a coil spring 102 and a hydraulic cylinder 104 located on the opposite side thereof through an operation transmitting mechanism 101 such as a wire or a link so as to apply a brake force to an axle (driving wheel 30) or to cancel a braking operation.

In addition, in the solenoid control valve 10, a brake force is applied or a braking operation is canceled by a hydraulic force. For example, upon canceling the braking operation, on the basis of a control signal transmitted from the controller 20, a solenoid brake canceling valve (brake canceling hydraulic opening/closing valve) 90 is opened, and pressure oil is controlled to be supplied from a hydraulic pump 21 driven by an engine 60 to a hydraulic cylinder 104 through a hydraulic line 22B. In addition, upon performing a braking operation, on the basis of a control signal transmitted from the controller 20, the solenoid control valve 9 is opened, and pressure oil is controlled to be supplied to the hydraulic chamber 103 accommodating the coil spring 102 through a hydraulic line 22A, thereby enabling the braking operation.
In addition, the reference numeral 23 indicates a relief valve.

That is, a service brake according to this embodiment includes a control brake hydraulic line disposed in parallel in a mechanical brake line, and a solenoid control valve is provided in the control brake hydraulic line. By means of the current supply control of the solenoid control valve, a hydraulic force of the hydraulic line is controlled so as to apply a brake force to the axle or wheel 30. On the other hand, when the solenoid brake canceling valve 90 is opened, pressure oil is controlled to be supplied to the hydraulic cylinder 104, and the braking operation is canceled.

In this case, in order to realize a function of a negative brake, the hydraulic force of the pressure oil supplied to the hydraulic cylinder 104 is set to be larger than "the hydraulic force of the pressure oil supplied to the coil spring 102 and the hydraulic chamber 103", thereby performing the function of the negative brake.

Accordingly, all the solenoid control valve 9 and the brake canceling valve 90 are hydraulic opening/closing valves respectively provided in the hydraulic lines 22A and 22B between the hydraulic pump 21 and the hydraulic chamber 103 (hydraulic cylinder 104), and are solenoid hydraulic opening/closing valves controlled to be opened or closed on the basis of the signals transmitted from the controller 20.

In addition, in accordance with the types of the input signals, the controller operates alarm means 11 and a brake lamp if necessary. The flow of the process using the controller 20 will be described later in detail.

Further, the controller 20 is connected to a plurality of sensors for detecting a vehicle traveling state and a vehicle stop state, and is connected to at least the brake pedal sensor 2 for detecting an operation amount of the brake pedal 1 operated by an operator, the vehicle speed sensor 3 for detecting the vehicle speed, the accelerator opening degree detecting sensor 5 for detecting an operation amount of the accelerator pedal 4 operated by the operator, and the shift range detecting means 8 for detecting the shift range instructed by the shift operating means 7 disposed in the operator's operation portion. In addition, as in this embodiment, the controller may be further connected to the engine rpm detecting sensor 6 for detecting the engine rpm.

Among the above-described constituents, the brake pedal sensor 2 detects the operation of the brake pedal 1 disposed in the operation portion, and outputs the resultant to the controller 20. In detail, the brake pedal sensor detects the operation amount such as the pressing amount of the pedal, the pressing start timing thereof, and the pressing speed thereof, and outputs the detection signal to the controller 20. In the controller 20, the operation of the hydraulic lines 22A and 22B of the service brake of the brake system provided in the vehicle is controlled on the basis of the detection signal.

The vehicle speed sensor 2 is a unit for detecting a vehicle speed of an industrial vehicle and outputting the detection value to the controller 20, and includes, for example, an rpm sensor provided in a final reduction gear, where a unit capable of inputting the vehicle speed signal in accordance with the rpm pulse to the controller 20 is used as the vehicle speed sensor.

The accelerator opening degree detecting sensor 5 detects the pressing state of the accelerator pedal 4 operated by the operator, and outputs the resultant to the controller. The controller 20 stores a relationship between the accelerator pressing amount and the output value output from an engine proportional valve (not shown) in accordance with the accelerator pressing amount. On the basis of the stored information, when the controller 20 controls the output supplied to the proportional valve for controlling an engine throttle valve in accordance with the detection signal transmitted from the accelerator opening degree detecting sensor 5, the engine rpm is controlled. The accelerator pedal 4 is disposed in the operator's operation portion, and is set to a desired rpm.

The shift range detecting means 8 is a unit for detecting the shift ranges (forward: F, neutral: N, and reverse: R) input by the shift operating means 7, and outputting the shift range detection signal to the controller 20. The shift operating means 7 is a unit which is disposed in the operator's operation portion and sets a desired shift range, where a shift lever, a shift switch, or the like is used as the shift operating means.

As described above, the solenoid control valve 9 is a valve for opening or closing a hydraulic pressure in accordance with an ON/OFF signal of the solenoid in order to control the braking operation of the solenoid control brake 10.

Here, the brake system generally provided in the vehicle includes a service brake (regular brake) which performs a deceleration, a stop, and the like in a vehicle traveling state and a parking brake (hand brake) which mainly maintains a vehicle stop state.

The parking brake is a unit which applies a brake force to the vehicle in a mechanical or electrical manner, and an example thereof includes a type in which a parking brake mechanism is mounted to a body of the service brake and a type in which an exclusive parking brake mechanism is separately provided.

In this embodiment, as described above, the service brake is controllable by the solenoid. When a predetermined condition is satisfied in the vehicle stop state, the solenoid control brake 10 is automatically operated. Accordingly, in the case where the solenoid control brake 10 is the parking brake, the braking state of the service brake is maintained so that the vehicle stop state is maintained regardless of an operation system 101 of the parking brake 11.

In addition, in this embodiment, it is desirable to provide alarm means 11. The alarm means 11 is means for giving an alarm to the operator or a third person in the vicinity of the vehicle when the brake control according to this embodiment is performed. For example, an alarm buzzer for outputting a voice or an alarm sound or an alarm lamp for turning on or on and off a lamp may be exemplified. In addition, when the brake control according to this embodiment is performed, a brake lamp 12 provided in the vehicle may be turned on.

With the above-described configuration, in this embodiment, the brake control shown in Fig. 2 is performed.

In the vehicle traveling state, the solenoid control valve 9 is closed, and the brake canceling valve 90 is opened so that the braking state of the solenoid control brake (service brake) 10 is canceled. In the case where the alarm means 11 and the brake lamp 12 are provided, they are maintained in an OFF state. When the vehicle speed sensor 3 detects that the vehicle speed is equal to or less than a predetermined vehicle speed X km/h indicating the vehicle stop state, the controller 20 determines that the vehicle is stopped. In addition, when the brake pedal sensor 2 detects that the brake pressing signal continues for a predetermined time Y or more, the controller 20 outputs a changing control signal so that the solenoid control valve 9 is opened and the brake canceling valve 90 is closed, and performs the brake control in which the braking state continues until the braking state is canceled. In the case where the alarm means 11 and the brake lamp 12 are provided, the alarm means and the brake lamp are turned on during the brake control.

When the shift range detecting means 8 detects an input signal indicating the forward or reverse of the shift range and the accelerator opening degree sensor 5 detects an accelerator ON signal indicating the pressing state of the accelerator pedal during the brake control of the solenoid brake 10, the controller 20 outputs a control signal for allowing the solenoid control valve 9 to be closed and the brake canceling valve 90 to be opened, so that the brake control is canceled. In the case where the alarm means 11 and the brake lamp 12 are provided, the alarm means and the brake lamp are turned off.

At this time, it is desirable that the brake control is canceled only when the input signal for indicating the forward or reverse of the shift range is continuously detected for a predetermined time t2 or more and the accelerator ON signal for indicating the pressing state of the accelerator pedal continues for a predetermined time t1 or more.

Next, a flow of a process using the controller 20 will be described in detail with reference to Figs. 3 and 4.

First, Fig. 3 shows a flow of the process of the brake control. Here, a flag for determining a setting of a process of automatically performing a brake control by reflecting the operator's vehicle stop/start intention (hereinafter, referred to as a brake control) is referred to as a brake control flag.

As shown in the same drawing, the controller 20 determines whether the brake control flag is turned on (S1). In the case where the brake control flag is turned on, the solenoid control valve 9 is opened, and the brake canceling valve 90 is closed so that the pressure oil is supplied from the pump 21 to the hydraulic chamber 103 of the solenoid control brake 10, thereby enabling (applying the brake force to) the solenoid control brake 10 (S2).

On the other hand, in the case where the brake control flag is turned off, on the basis of the control signal transmitted from the controller 20, the brake canceling valve 90 is opened, and the solenoid control valve 9 is closed, so that the pressure oil is supplied from the pump 21 to the hydraulic cylinder 104 of the solenoid control brake 10, thereby disabling the solenoid control brake 10.

Fig. 4 shows a flow of a process of turning on or off the brake control flag. Here, on the basis of the set or canceled brake control flag, the brake control shown in Fig. 3 is performed.

First, a process of turning on the brake control flag will be described below.

The controller 20 determines whether the brake control flag is turned on (S11). In the case where the brake control flag is turned off, the brake pedal sensor 2 determines whether a brake ON signal for indicating the pressing state of the brake pedal continues for a predetermined time X or more (S12). In the case where the brake control flag is turned on, the vehicle speed sensor 3 detects whether the vehicle speed is not more than a vehicle speed indicating the vehicle stop state (S13). In the case where the vehicle speed sensor detects that the vehicle is stopped, the brake control flag is turned on (S14). On the other hand, in the case where the brake pedal sensor 2 is turned off or the vehicle is not stopped, the process returns.

Next, a process of turning off the brake control flag will be described below.

The controller 20 determines whether the brake control flag is turned on (S11). In the case where the brake control flag is turned on, the shift range detecting means 8 detects the current shift range of F (forward), N (neutral), or R (reverse) (S15). In the case where the shift range is N, the process returns. In the case where the shift range is F or R, the accelerator opening degree detecting sensor 5 determines whether the accelerator pedal is pressed (S16). In the case where the accelerator pedal is pressed, it is determined that the brake control cancel condition is satisfied, and the brake control flag is turned off (S17). On the other hand, in the case where the brake control cancel condition is not satisfied, the process returns.

Likewise, according to this embodiment, it is possible to perform a control for realizing an operator's intention to stop or start the vehicle with a simple configuration without performing a troublesome driving operation, and thus to improve the operator's operability and safety.

That is, in this embodiment, it is determined that the operator intends to stop the vehicle when the brake ON signal of the brake pedal 1 is continuously detected for a predetermined time Y or more. In this case, since a control for automatically enabling the solenoid control brake 10 is performed, it is possible to reliably maintain the vehicle stop state even when a vehicle posture is not stable on a slope or the like, and thus to improve safety. In addition, since the control is performed only when the brake ON signal is continuously detected for the predetermined time Y or more, it is possible to accurately determine the operator's intention to stop the vehicle.

In addition, since the brake control cancel condition is set such that the brake control is canceled only when the shift range is the forward or reverse and the accelerator pedal is pressed, it is possible to perform a control for realizing the operator's intention to start the vehicle, and to prevent an erroneous control such that the brake control is canceled at a timing not intended by the operator. Also, since the predetermined time t2 is set for determining the continuous state of the forward or reverse and the predetermined time t1 is set for determining the continuous state of the accelerator opening degree, even when the operator erroneously operates the pedal or the shift, it is possible to reliably detect the erroneous operation, and thus to smoothly cancel the brake control.

Further, since it is possible to inform the operator or the third person in the vicinity of the vehicle of the enabled or disabled state of the solenoid control brake 10 by using the alarm means 11 or the brake lamp 12, it is possible to guide the operator to perform an appropriate driving operation, and for the operator and the third person to accurately detect the vehicle state. As a result, it is possible to improve safety.

Furthermore, since the hydraulic negative brake is used as the solenoid control brake 10, in the case where the engine is completely turned off in the vehicle stop state or trouble or inconvenience is caused by the disconnection or the like of the solenoid control valve 9, the solenoid control brake 10 is reliably enabled, thereby improving the safety of the vehicle.

### Industrial Applicability

In this embodiment, since it is possible to perform a control for realizing an operator's intention to stop or start the vehicle with a simple configuration without performing a troublesome driving operation, the invention may be appropriately applied to various industrial vehicles such as a cargo handling machine such as a forklift or a reach stacker or a construction machine such as a motor grader, a bulldozer, or a wheel loader, in which the operator frequently and temporarily leaves a driver seat due to work, as well as general vehicles such as an automobile.

## Claims

1. A vehicle controller mounted to a vehicle, comprising:
a vehicle speed sensor configured to detect a vehicle speed;
a brake pedal sensor configured to detect an operation state of a brake pedal used to operate a service brake;
a solenoid control valve provided in any one of brake hydraulic lines of the service brake and a parking brake or any one of control brake hydraulic lines disposed in parallel to the brake hydraulic lines regardless of the operation of the service brake; and
a controller configured to control a current supply to the solenoid control valve so as to control an operation state of a hydraulic force in the hydraulic line provided with the solenoid control valve and to apply (hereinafter, referred to as enable) or cancel a solenoid control brake braking force applied to an axle or a wheel,
wherein when the vehicle speed detected by the vehicle speed sensor is not more than a predetermined vehicle speed indicating a vehicle stop state and a brake ON signal detected by the brake pedal sensor continues for a predetermined time or more, the controller outputs a control signal to the solenoid control valve so as to enable the solenoid control brake.

2. The vehicle controller according to claim 1, wherein the vehicle includes an accelerator opening degree detecting sensor configured to detect an accelerator ON state and shift range detecting means for detecting a shift range instructed by shift operating means, and
wherein when the controller detects an input signal indicating a forward or reverse through the shift range detecting means and detects an accelerator ON state having a predetermined opening degree or more through the accelerator opening degree detecting sensor, the controller outputs a cancel signal to the solenoid control valve so as to disable the solenoid control brake.

3. The vehicle controller according to claim 2, wherein the detection of the accelerator ON state and the input signal indicating the forward or reverse detected by the shift range detecting means is valid when the detection time is a predetermined time or more.

4. The vehicle controller according to claim 1, further comprising:
alarm means for giving an alarm to an operator or a third person in the vicinity of the vehicle when the solenoid control brake is enabled.

5. The vehicle controller according to claim 1, wherein a brake lamp included in the vehicle is turned on when the solenoid control brake is enabled.

6. A vehicle comprising the vehicle controller according to any one of claims 1 to 5.
